# EUROPÄISCHE PATENTSCHRIFT

(11) **EP 0 879 168 B1**
(45) Veröffentlichungstag und Bekanntmachung des Hinweises auf die Patenterteilung: **15.09.1999**
(21) Anmeldenummer: 97902351.2
(22) Anmeldetag: 07.02.1997
(51) Int. Cl.: B62K 5/08, A63H 17/36

(54) **LENKUNG FÜR FAHRZEUGE, INSBES. MUSKELKRAFTBETRIEBENE SPIELFAHRZEUGE**
STEERING SYSTEM FOR VEHICLES, IN PARTICULAR MUSCLE-POWER-DRIVEN TOY VEHICLES
SYSTEME DE DIRECTION POUR VEHICULES, EN PARTICULIER POUR VEHICULES JOUETS ACTIONNES PAR LA FORCE MUSCULAIRE

(30) Priorität: 12.02.1996 DE 19605101
(43) Veröffentlichungstag der Anmeldung: 25.11.1998
(73) Patentinhaber: Augenstein, Leonhard, 82335 Berg (DE)
(72) Erfinder: AUGENSTEIN, Leonhard, D-82335 Berg (DE); THIE, Ulrich, D-82216 Maisach (DE)
(74) Vertreter: Goetz, Rupert, Dipl.-Ing.
(86) Internationale Anmeldenummer: EP9700565
(87) Internationale Veröffentlichungsnummer: WO9729939

(56) Entgegenhaltungen:
- DE-C- 136 312
- DE-C- 671 255
- DE-C- 961 956
- DE-U- 7 829 533

## Beschreibung

Die Erfindung betrifft eine Lenkung nach dem Oberbegriff des Anspruchs 1.

Bei einfachen Fahrzeugen wie z.B. Leiterwagen und für Kleinkinder im Alter von etwa einem bis drei Jahren vorgesehenen Spielfahrzeugen mit lenkbarer Vorderachse ist diese üblicherweise als Ganzes um eine senkrechte Lenkachse drehbar gelagert. Bei dieser Art der Lagerung entspricht der Lenkrollradius der halben Achslänge; dies bedeutet, daß jeder Widerstand, auf den eines der gelenkten Räder trifft, ein großes Einschlagmoment erzeugt, so daß es dem Benutzer schwerfällt, die gewählte Fahrtrichtung beizubehalten. Eine weitere Folge des großen Lenkrollradius ist ein großer Platzbedarf der gelenkten Räder; dementsprechend sind große Radkästen erforderlich, wenn die gelenkten Räder geschützt untergebracht werden sollen. Vor allem aber hat der große Lenkrollradius der auf einer durchgehenden Achse gelagerten Räder den Nachteil, daß die Aufstandspunkte der Räder sich beim Einschlagen der Längsmittelebene des Fahrzeugs umsomehr nähern je stärker der Einschlag ist. Die bei gegebener Fahrtgeschwindigkeit mit zunehmendem Radeinschlag ebenfalls zunehmenden Zentrifugalkräfte, die auf das Fahrzeug und dessen Benutzer einwirken, führen deshalb leicht zum Umkippen des Fahrzeugs.

Diese Nachteile werden bei einer Lenkung gemäß DE 78 29 533 U1 weitgehend vermieden. Bei dieser Lenkung sind die beiden lenkbaren Vorderräder eines Fahrzeugs auf je einem Achsschenkel gelagert, der mit einem rechtwinklig von ihm wegragenden Spurhebel fest verbunden oder einstückig ausgebildet ist. Die beiden Spurhebel sind gelenkig mit einer Spurstange verbunden, die ihrerseits mit einem zentralen Drehkörper durch ein Schiebegelenk verbunden ist. Dieses Schiebegelenk besteht aus einer an der Spurstange befestigten Platte mit einem in Fahrzeuglängsrichtung verlaufenden Langloch und einem darin geführten, abgebogenen Ende einer Lenkwelle. Bei solchen Lenkungen lassen sich die Lenkrollradien gering halten; bei schräger Anordnung von Achsschenkelbolzen, um welche die Achsschenkel schwenkbar sind, lassen sich sogar Lenkrollradien vom Betrag Null erreichen. Solche komplexen Lenkungen erfordern aber einen erheblichen Herstellungs- und oft auch Wartungsaufwand, der einfache Fahrzeuge, insbesondere muskelkraftbetriebene Spielfahrzeuge, erheblich verteuert.

Eine Lenkung nach dem Oberbegriff des Anspruchs 1, die ohne Spurstange auskommt, ist aus der DE PS 671 255, insbesondere Abb. 3 und 4, bekannt. Dort ist als Träger der Lenkung ein Spielzeugboden vorgesehen, der an seinen beiden längsgerichteten Rändern je einen aufgebogenen Rand mit je einem Ausschnitt aufweist. In die beiden Ausschnitte ist je ein Achsschenkel eingelegt, der zu diesem Zweck einen in den Ausschnitt passenden Hals aufweist, welcher zwischen einem Kragen und einem in der Art einer Lanzenspitze ausgebildeten Kopf des betreffenden Achsschenkels derart ausgebildet ist, daß der Achsschenkel in einer zum Spielzeugboden parallelen Ebene schwenkbar, jedoch nicht aus dem Ausschnitt axial herausziehbar ist. An der Unterseite des Spielzeugbodens ist mittig ein zentraler Drehkörper gelagert, der mit zwei an ihm ausgebildeten, hochgekanteten Führungslappen durch je einen zur Lagerstelle konzentrischen, kreisbogenförmigen Schlitz im Spielzeugboden hindurchgreift. Jeder der Lappen weist oberhalb des Spielzeugbodens eine Führung auf, in die der Kopf des benachbarten Achsschenkels eingreift, so daß jeder der Achsschenkel mit dem zentralen Drehkörper ein Schiebegelenk bildet.

Der Erfindung liegt die Aufgabe zugrunde, eine Lenkung für insbesondere mulskelkraftbetriebene Fahrzeuge zu schaffen, die sich mit noch geringerem Aufwand herstellen läßt und die Gefahr noch geringer hält, daß das Fahrzeug bei schneller Fahrt mit stark eingeschlagenen Rädern umkippt.

Die Aufgabe ist erfindungsgemäß mit den Merkmalen des Anspruchs 1 gelöst. Vorteilhafte Weiterbildungen ergeben sich aus den Unteransprüchen.

Bei der erfindungsgemäßen Anordnung entfernen sich die gelenkten Räder mit zunehmendem Radeinschlag von der Lenkachse. Mit anderen Worten verbreitert sich die Spur der gelenkten Radanordnung umsomehr, je weiter die Räder eingeschlagen werden. Dies hat in erster Linie den Vorteil, daß ein mit der erfindungsgemäßen Lenkung ausgestattetes Fahrzeug in Kurven weniger leicht umkippt als Fahrzeuge mit einer bekannten Lenkung. Die mit zunehmendem Radeinschlag zunehmende Spur der erfindungsgemäß gelenkten Räder hat ferner zur Folge, daß diese Räder verhältnismäßig stark eingeschlagen werden können, auch wenn sie bei Geradeausfahrt in ungefähr gleicher Weise wie nichtgelenkte Räder in geringem Abstand außerhalb je einer Längsseitenwand des Fahrzeugs angeordnet sind. Schließlich werden die Herstellungskosten durch die Erfindung gering gehalten, da die beiden Achsschenkel sich als solche, ohne zwischengeschaltete Lenker od.dgl. bis zum zentralen Drehkörper, mit dem sie gelenkig verbunden sind, erstrecken können. Eine Wartung ist entweder überhaupt nicht erforderlich oder sie kann auf gelegentliches Schmieren der beiden Schwenklager der Achsschenkel sowie der Anlenkstellen am zentralen Drehkörper beschränkt werden.

Die in den Ansprüchen 2 und 3 betriebenen Weiterbildungen der Erfindung haben den zusätzlichen Vorteil, daß ausgehend von Geradeausfahrt ein bestimmter Lenkradeinschlag einen verhältnismäßig großen Radeinschlag bei noch verhältnismäßig kleiner Spurvergrößerung des gelenkten Radpaars hervorruft, während ein gleichgroßer zusätzlicher Lenkradeinschlag bei schon eingeschlagenen Rädern einen kleineren zusätzlichen Radeinschlag, jedoch eine größere zusätzliche Spurvergrößerung hervorruft. Dadurch wird die Sicherheit gegen Umkippen des Fahrzeugs bei besonders starkem Radeinschlag in besonderem Maß erhöht.

Mit den Merkmalen der übrigen Unteransprüche lassen sich Herstellung und Montage der erfindungsgemäßen Lenkung besonders weitgehend erleichtern.

Ein Ausführungsbeispiel der Erfindung wird im folgenden anhand schematischer Zeichnungen mit weiteren Einzelheiten erläutert. Es zeigen:
- Fig.1: die Untersicht einer erfindungsgemäßen Lenkung bei Geradeausfahrt,
- Fig.2: den Schnitt II-II in Fig.1,
- Fig.3: die Untersicht der Lenkung bei Einschlag nach rechts und
- Fig.4: die Untersicht der Lenkung bei Einschlag nach links.

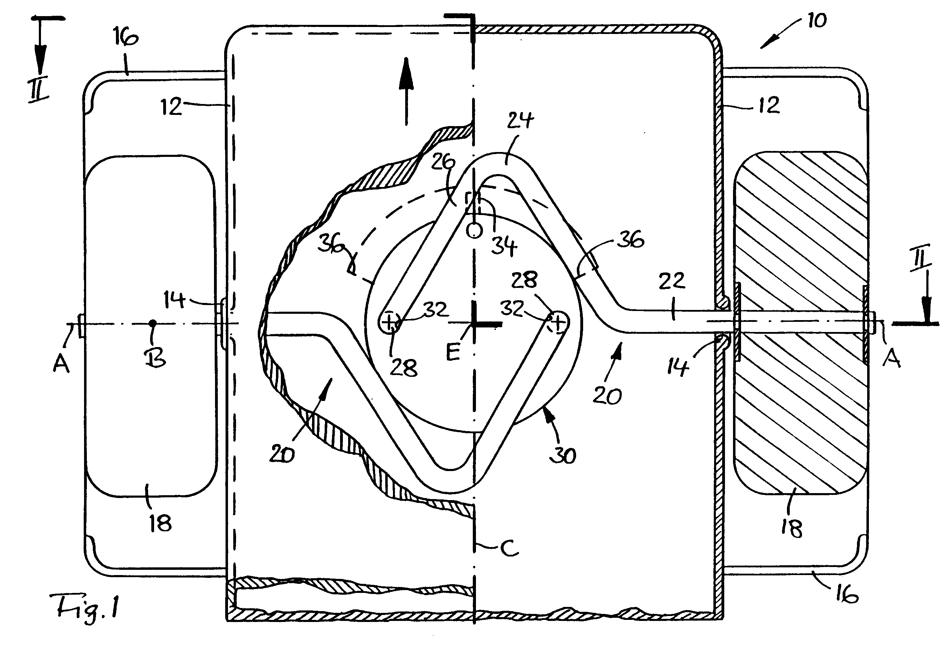

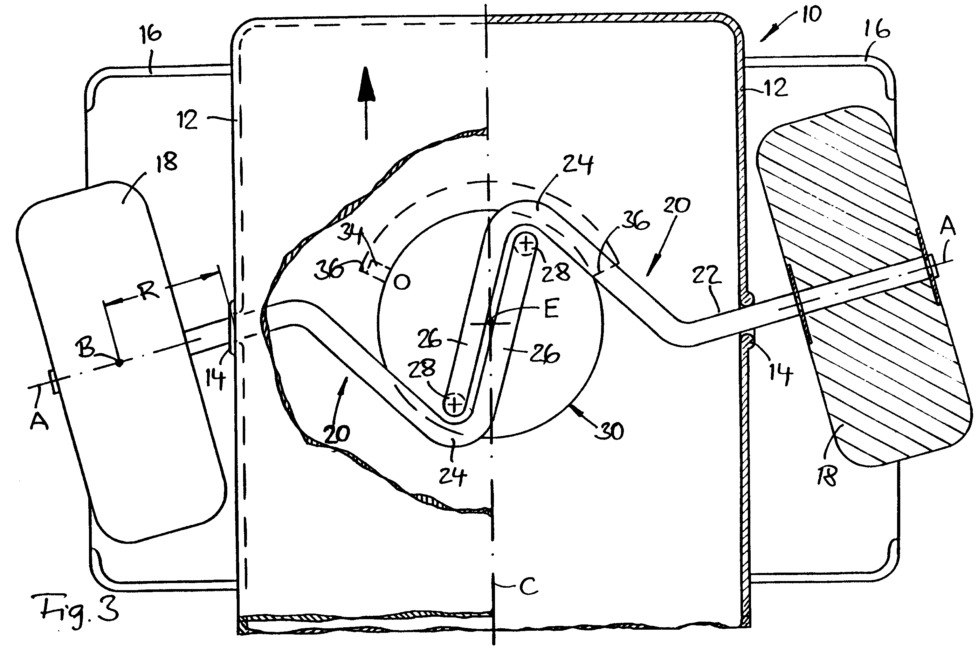

In den Zeichnungen ist die Karosserie 10 eines Fahrzeugs nur teilweise angedeutet; sie hat zwei Seitenwände 12, in denen je ein Schwenklager 14 ausgebildet ist. Außenbords der Schwenklager 14 ist je ein Radkasten 16 für ein Rad 18 angeordnet. Die Räder 18 sind auf je einem Achsschenkel 20 gelagert, der zu diesem Zweck je einen geraden Abschnitt 22 aufweist. Dieser definiert die Radachse A des zugehörigen Rades 18 und ist im zugehörigen Schwenklager 14 in einer die Radachse A enthaltenden, zur Zeichnungsebene der Fig.1, 3 und 4 parallelen Ebene schwenkbar sowie längs der Radachse A verschiebbar gelagert. Innerhalb des Fahrzeugs, also im Bereich zwischen den beiden Seitenwänden 12, hat jeder der beiden Achsschenkel 20 eine sich an seinen geraden Abschnitt 22 anschließende, in Draufsicht V-förmige Kröpfung 24, von deren innerem, vom zugehörigen Schwenklager 14 weiter entferntem Abschnitt 26 sich ein Lagerzapfen 28 nach oben erstreckt. Im dargestellten Beispiel ist jeder der beiden Lagerzapfen 28 mit dem zugehörigen Achsschenkel 20 einstückig ausgebildet und so angeordnet, daß seine geometrische Achse die zugehörige Radachse A rechtwinklig schneidet.

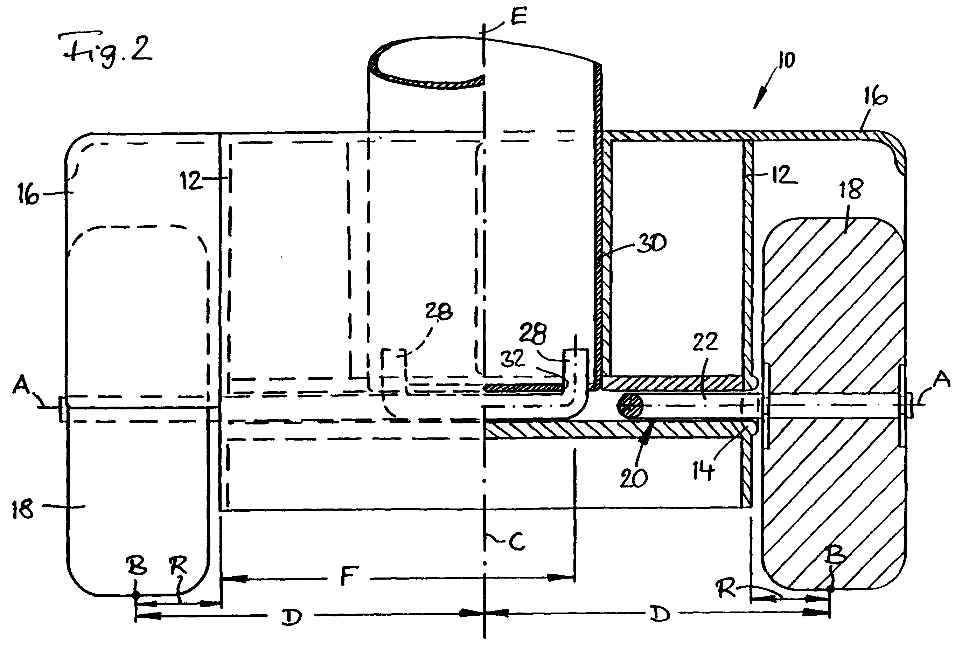

Die Räder 18 sowie deren Aufstandspunkte B und die Achsschenkel 20 sind bei Geradeausfahrt symmetrisch zu einer senkrechten Mittelebene C angeordnet, die zugleich Längsmittelebene des Fahrzeugs ist. Im dargestellten Beispiel liegen die beiden Achsschenkel 20 mit Ausnahme ihrer Lagerzapfen 28 ständig in einer gemeinsamen, zur Mittelebene C normalen Ebene. Von dieser Mittelebene C haben die beiden Aufstandspunkte B immer den gleichen Abstand D, der bei Geradeausfahrt gemäß Fig.1 und 2 seinen kleinsten Betrag hat.

Zur Lenkung gehört ferner ein zentraler Drehkörper 30, der um eine in der Mittelebene C liegende, zur gemeinsamen Ebene der beiden Achsschenkel 20 normale Lenkachse E drehbar ist und zwei in bezug zur Lenkachse E einander diametral gegenüberliegende Anlenkstellen 32 aufweist. Jeder der beiden Achsschenkel 20 ist mit seinem Lagerzapfen 28 an derjenigen der beiden Anlenkstellen 32 angelenkt, die bei der Stellung für Geradeausfahrt gemäß Fig.1 und 2 vom Schwenklager 14 des betreffenden Achsschenkels 20 am weitesten entfernt ist. Deshalb überlappen sich die beiden Achsschenkel 20 im Bereich ihrer Kröpfungen 24.

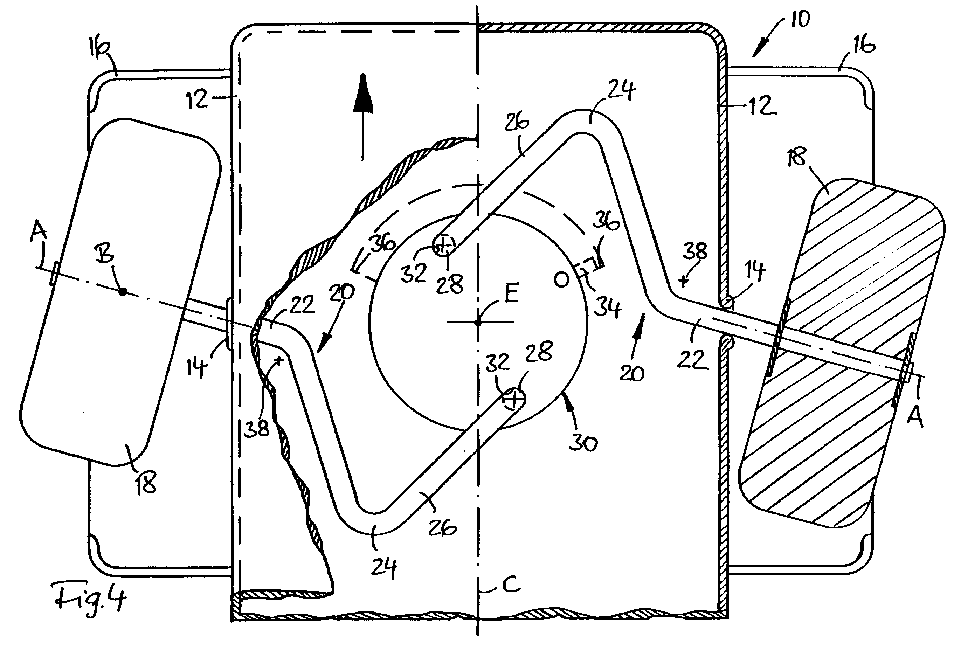

Der Drehbereich des Drehkörpers 30 ist, ausgehend von seiner Stellung für Geradeausfahrt gemäß Fig.1 und 2, in beiden Drehrichtungen auf je 60 bis 75°, im dargestellten Beispiel auf ungefähr je 67°, begrenzt. Zu diesem Zweck kann am zentralen Drehkörper 30 ein Anschlag 34 ausgebildet sein, der mit zwei Anschlägen 36 an der Karosserie 10 zusammenwirkt. Alternativ oder zusätzlich können an der Karosserie 10 Anschläge 38 vorgesehen sein, die zum Begrenzen des Einschlags nach rechts mit je einem der beiden Achsschenkel 20 zusammenwirken, und der Einschlag nach links kann gemäß Fig.4 dadurch begrenzt sein, daß die beiden inneren Abschnitte 26 der Achsschenkel 20 sich aneinanderlegen.

Bei Geradeausfahrt sind die beiden Räder 18 in verhältnismäßig geringem Abstand außerhalb je einer der beiden Seitenwände 12 angeordnet. Dabei hat der Aufstandspunkt B jedes Rades 10 seinen kleinstmöglichen Abstand D von der Mittelebene C, und die Anlenkstellen 32 beider Achsschenkel 20 haben ihren größtmöglichen Abstand F vom zugehörigen Schwenklager 14. Dies bedeutet zugleich, daß der Lenkrollradius R jedes Rades 18, das ist der Abstand des Aufstandspunktes B vom zugehörigen Schwenklager 14, seinen kleinstmöglichen Betrag hat.

Wenn der Drehkörper 30, ausgehend von seiner in Fig.1 und 2 abgebildeten Stellung für Geradeausfahrt, nach rechts oder links gedreht wird, so werden die beiden Räder 18, bezogen auf die in Fig.1, 3 und 4 mit einem Pfeil bezeichnete Fahrtrichtung, nach rechts bzw. nach links eingeschlagen. Gleichzeitig werden die beiden Achsschenkel 20 in ihren Schwenklagern 14 axial nach außen verschoben, so daß sich der Abstand D jedes der beiden Aufstandspunkte B von der Mittelebene C, und dementsprechend auch der Lenkrollradius R jedes Rades 18 in dem Maß vergrößert, in dem sich der Abstand F jeder der beiden Anlenkstellen 32 vom zugehörigen Schwenklager 14 vermindert. Dadurch, daß sich die Aufstandspunkte B nach außen verschieben, wenn die Räder 18 eingeschlagen werden, berühren diese auch in eingeschlagenem Zustand die benachbarte Seitenwand 12 der Karosserie 10 nicht, obwohl der Abstand jedes Rades 18 von der benachbarten Seitenwand 12 schon bei Geradeausfahrt verhältnismäßig knapp bemessen ist.

## Patentansprüche

1. Lenkung für Fahrzeuge, insbes. muskelkraftbetriebene Spielfahrzeuge, mit
- zwei Achsschenkeln (20), die in je einem Schwenklager (14) gelagert sind und je eine Radachse (A) definieren, und
- einem zentralen Drehkörper (30), der um eine Lenkachse (E) drehbar gelagert ist und zwei Anlenkstellen (32) aufweist, die in bezug auf die Lenkachse (E) gegeneinander versetzt und mit je einem der beiden Achsschenkel (20) gelenkig verbunden sind,
dadurch gekennzeichnet, daß jeder der beiden Achsschenkel (20) in seinem Schwenklager (14) axial verschiebbar geführt und an der von diesem Schwenklager (14) bei Geradeausfahrt am weitesten entfernten Anlenkstelle (32) des Drehkörpers (30) derart angelenkt ist, daß jeder Achsschenkel (20) mit dem Drehkörper (30) eine Kniehebelanordnung bildet.

2. Lenkung nach Anspruch 1,
dadurch gekennzeichnet, daß die beiden Anlenkstellen (32) einander ungefähr diametral gegenüberliegen.

3. Lenkung nach Anspruch 2,
dadurch gekennzeichnet, daß die beiden Anlenkstellen (32) bei Geradeausfahrt ungefähr in einer gemeinsamen Ebene mit den beiden Radachsen (A) und der Lenkachse (E) angeordnet sind.

4. Lenkung nach einem der Ansprüche 1 bis 3,
dadurch gekennzeichnet, daß
- die beiden Achsschenkel (20) angrenzend an die zugehörige Anlenkstelle (32) je eine Kröpfung (24) aufweisen, wobei
- die Kröpfung (24) eines Achsschenkels (20) nach vorne, und diejenige des anderen nach hinten weist.

5. Lenkung nach Anspruch 4,
dadurch gekennzeichnet, daß die beiden Kröpfungen (24) V-förmig sind.

6. Lenkung nach einem der Ansprüche 1 bis 5,
dadurch gekennzeichnet, daß die beiden Achsschenkel (20) je einen Lagerzapfen (28) aufweisen, der rechtwinklig zur zugehörigen Radachse (A) angeordnet und in einem die zugehörige Anlenkstelle (32) bildenden Loch des Drehkörpers (30) aufgenommen ist.

7. Lenkung nach einem der Ansprüche 1 bis 6,
dadurch gekennzeichnet, daß der Drehkörper (30) vom unteren Ende einer Lenkwelle gebildet ist.

8. Lenkung nach einem der Ansprüche 1 bis 7,
dadurch gekennzeichnet, daß die Schwenklager (14) in je einer Seitenwand (12) einer Karosserie (10) ausgebildet sind.

## Claims

1. A steering system for vehicles, in particular muscle power-operated toy vehicles, comprising
- two stub axles (20) which are supported in one swivel bearing (14) each and define one wheel axis (A) each; and
- a central rotary body (30) which is supported so as to be rotable about a steering axis (E) and which comprises two coupling portions (32) which are offset relative to each other with respect to the steering axis (E) and are articulately connected with one each of the two stub axles (20),
characterised in that each of the two stub axles (20) is guided in its swivel bearing (14) so as to be axially movable and is coupled at the coupling portion (32) of the rotary body (30) which is most remote from this swivel bearing (14) in straight-ahead driving in such a manner that each stub axle (20) together with the rotary body (30) forms a knee lever arrangement.

2. The steering system according to Claim 1,
characterised in that the two coupling portions (32) are arranged approximately diametrically opposite to each other.

3. The steering system according to Claim 2,
characterised in that the two coupling portions (32) are arranged approximately in a common plane with the two wheel axes (A) and the steering axis (E) during straight-ahead driving.

4. The steering system according to one of Claims 1 to 3,
characterised in that
- the two stub axles (20) comprise an offset (24) each adjacent to the associated coupling portion (32), with
- the offset (24) of one stub axle (20) facing forwards and that of the other one facing rearwards.

5. The steering system according to Claim 4,
characterised in that the two offsets (24) are Vee-shaped.

6. The steering system according to one of Claims 1 to 5,
characterised in that the two stub axles (20) comprise a bearing journal (28) each, which is arranged at a right angle relative to the associated wheel axis (A) and accommodated in a hole of the rotary body (30), which forms the associated coupling portion (32).

7. The steering system according to one of Claims 1 to 6,
characterised in that the rotary body (30) is formed by the lower end of a steering shaft.

8. The steering system according to one of Claims 1 to 7,
characterised in that the swivel bearings (14) are formed in a side wall (12) each of a vehicle body (10).

## Revendications

1. Direction pour véhicules, en particulier pour véhicules jouets mus par la force musculaire, comprenant
- deux branches d'axe (20) qui sont montées chacune dans un palier d'articulation (14) et définissent chacune un axe de roue (A), et
- un corps tournant central (30) qui est monté tournant autour d'un axe de direction (E) et présente deux emplacements d'articulation (32) qui sont désaxés l'un par rapport a l'autre par rapport à l'axe de direction (E) et sont respectivement reliés de façon articulée chacun à une des deux branches d'axe (20),
caractérisée en ce que chacune des deux branches d'axe (20) est guidée coulissante axialement dans son palier d'articulation (14) et est articulée sur l'emplacement d'articulation (32) le plus éloigné de ce palier d'articulation lors d'un déplacement en ligne droite (14), de telle façon que chaque branche d'axe (20) forme avec le corps tournant (30) un système à levier coudé.

2. Direction selon la revendication 1,
caractérisée en ce que les deux emplacements d'articulation (32) sont approximativement diamétralement opposés.

3. Direction selon la revendication 2,
caractérisée en ce que les deux emplacements d'articulation (32) sont disposés, lors d'un déplacement en ligne droite, approximativement dans un plan commun avec les deux axes de roues (A) et l'axe de direction (E).

4. Direction selon l'une quelconque des revendications 1 à 3,
caractérisée en ce que
- les deux branches d'axe (20) présentent chacune une partie coudée (24) contigue à l'emplacement d'articulation (32) associé,
- la partie coudée (24) d'une branche d'axe (20) étant dirigée vers l'avant et celle de l'autre vers l'arrière.

5. Direction selon la revendication 4,
caractérisée en ce que les deux parties coudées (24) sont en forme de V.

6. Direction selon l'une quelconque des revendications 1 à 5,
caractérisée en ce que les deux branches d'axe (20) présentent chacune un tourillon (28) qui est disposé à angle droit par rapport à l'axe de roue (A) associé et est logé dans un trou du corps tournant (30) formant l'emplacement d'articulation (32) associé.

7. Direction selon l'une quelconque des revendications 1 à 6,
caractérisée en ce que le corps tournant (30) est formé par l'extrémité inférieure d'un arbre de direction.

8. Direction selon l'une quelconque des revendications 1 à 7,
caractérisée en ce que les paliers d'articulation (14) sont formés chacun dans une paroi latérale (12) d'une carrosserie (10).
